# EUROPÄISCHE PATENTSCHRIFT

(11) **EP 2 964 359 B1**
(45) Veröffentlichungstag und Bekanntmachung des Hinweises auf die Patenterteilung: **03.03.2021**
(21) Anmeldenummer: 14701468.2
(22) Anmeldetag: 16.01.2014
(51) Int. Cl.: F15B 21/04, B01D 29/54, B01D 29/58, B01D 35/027, B01D 35/147, B01D 35/153

(54) **FILTERVORRICHTUNG**
FILTER DEVICE
DISPOSITIF DE FILTRATION

(30) Priorität: 09.03.2013 DE 102013004142
(43) Veröffentlichungstag der Anmeldung: 13.01.2016
(73) Patentinhaber: Hydac Filtertechnik GmbH, 66280 Sulzbach/Saar (DE)
(72) Erfinder: WILKENDORF, Werner, 66564 Ottweiler (DE)
(74) Vertreter: Bartels und Partner, Patentanwälte
(86) Internationale Anmeldenummer: PCT/EP2014/000097
(87) Internationale Veröffentlichungsnummer: WO 2014/139613

(56) Entgegenhaltungen:
- EP-A2- 0 502 411
- US-A- 3 224 583

## Beschreibung

Die Erfindung betrifft eine Filtervorrichtung mit den Merkmalen im Oberbegriff von Anspruch 1.

Filtervorrichtungen dieser Art sind in einer Vielzahl von Bauweisen Stand der Technik. Bei Hydrauliksystemen, bei denen in einem offenen Hydraulikkreislauf die Rücklaufmenge von Arbeitshydrauliken, beispielsweise in Form von Arbeitszylindern, gefiltert werden, wobei aus einem geschlossenen Hydraulikkreislauf des zugehörigen hydrostatischen Antriebs, wie Pumpen oder Motoren, Leckölmengen anfallen, ergeben sich Probleme in Zusammenhang mit der Filtration des anfallenden Lecköls. Im Hinblick auf den Erhalt der erforderlichen Systemreinheit ist das Filterelement des die Rücklaufmengen aus der Arbeitshydraulik filtrierenden Arbeitsfilters auf eine hohe Filterfeinheit auszulegen, um eine Feinstfiltration der Rücklaufmengen zu gewährleisten. Bei am Arbeitsfilter in Betrieb anfallenden großen Rücklaufmengen, hohen Viskositäten (Kaltbetrieb) des Hydraulikfluids oder durch größere Verschmutzung des Filterelements entstehen am Arbeitsfilter verhältnismäßig hohe Gegendrücke. Dadurch verbietet es sich, den auf große Filterfeinheit ausgelegten Arbeitsfilter zur Feinstfiltration anfallenden Lecköls auszunutzen, weil die Lecköl erzeugenden Komponenten, wie Pumpen oder Motoren, wegen ihrer Wellendurchführungen und Dichtungen keine höheren Lecköldrücke vertragen. Man ist daher gezwungen, für die Leckölfiltration besondere Maßnahmen vorzusehen, beispielsweise eigene Leckölfilter gröberer Filterfeinheit, um höhere Gegendrücke auszuschließen, was wiederum die Systemreinheit negativ beeinflusst.

Die EP 0 502 411 A2 beschreibt eine Filtervorrichtung mit mindestens einem ersten Anschluss an einem hydraulischen Arbeitskreislauf, dem ein Filterelement zugeordnet ist, und mit mindestens einem weiteren Anschluss, über den Leckölmengen hydraulischer Komponenten zuführbar sind, wobei eine Steuereinrichtung vorgesehen ist, mittels deren bei Unterschreiten eines vorgebbaren Arbeitsdruckes des Arbeitskreislaufs am ersten Anschluss die Leckölmengen vom weiteren Anschluss zu dem Filterelement zuführbar sind, wobei die Steuereinrichtung eine Ventilanordnung mit zumindest einem Rückschlagventil aufweist, das bei einem am weiteren Anschluss herrschenden Lecköldruck, der den Arbeitsdruck am ersten Anschluss übersteigt, den weiteren Anschluss mit dem ersten Anschluss verbindet.

Die US 3 224 583 zeigt eine Filtervorrichtung mit zwei koaxial zueinander angeordneten Filterelementen auf.

Im Hinblick auf diese Problematik stellt sich die Erfindung die Aufgabe, eine Filtervorrichtung der betrachteten Art zur Verfügung zu stellen, die auf besonders einfache Weise eine effiziente Filtration anfallender Leckölmengen ermöglicht.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass die Steuereinrichtung eine Ventileinrichtung mit einem mit dem weiteren Anschluss direkt verbundenen zweiten Rückschlagventil aufweist, das bei Übersteigen eines gewünschten Bereichs der Höhe des Lecköldrucks öffnet und den weiteren Anschluss mit einem zu einer Rücklauf- oder Tankseite führenden Leitungszweig verbindet. Dadurch ist durch die Steuereinrichtung auf einfache Weise eine Druckbegrenzung des Lecköls erreicht.

Es ist eine Steuereinrichtung vorgesehen, mittels deren bei Unterschreiten eines vorgebbaren Arbeitsdruckes des Arbeitskreislaufs am ersten Anschluss die Leckölmengen vom weiteren Anschluss zu dem Filterelement zuführbar sind. Die Erfindung nutzt hierbei den Umstand aus, dass in neuerer Zeit im Interesse besserer Energieeffizienz insbesondere bei mobilen Arbeitsgeräten im offenen hydraulischen Arbeitskreislauf immer mehr Konstantpumpen durch geregelte Pumpen ersetzt werden. Dies hat zur Folge, dass die Ölmengen, die über den Arbeitsfilter mit dem auf hohe Filterfeinheit ausgelegten Filterelement zurückgeführt werden, gemäß dem Lastprofil der betreffenden Arbeitshydrauliken stark schwanken und absolut gesehen kleiner werden. Dies bedeutet, dass während längerer Betriebszeiträume, bei denen die betreffende Verstellpumpe im Teillastbereich arbeitet oder gänzlich zurückgeschwenkt ist, kein oder ein geringer Gegendruck an dem Filterelement des Arbeitsfilters ansteht. Die erfindungsgemäß vorgesehene Steuereinrichtung führt bei diesen Betriebsphasen, d.h. immer dann, wenn ein vorgebbarer Arbeitsdruck des Arbeitskreislaufs am ersten Anschluss unterschritten ist, die Leckölmengen vom weiteren Anschluss zum Filterelement zu, so dass das Arbeitsfilter zur Feinstfiltration der Leckölmengen genutzt wird. Durch das Ausnutzen des Feinstfilters des hydraulischen Arbeitskreislaufs für die Filtration des Lecköls ist insgesamt eine bessere Ölqualität erreichbar.

Die Steuereinrichtung weist eine Ventilanordnung mit zumindest einem Rückschlagventil auf, das bei einem am weiteren Anschluss herrschenden Lecköldruck, der den Arbeitsdruck am ersten Anschluss übersteigt, den weiteren Anschluss mit dem ersten Anschluss verbindet. Dadurch ist auf einfache Weise sichergestellt, dass ein sich am Feinstfilter aufbauender Druck nicht am Leckölanschluss wirksam werden kann.

Bei besonders vorteilhaften Ausführungsbeispielen ist in dem vom zweiten Rückschlagventil zur Rücklauf- oder Tankseite führenden Leitungszweig ein zweites Filterelement mit einer Filterfeinheit vorgesehen, die gröber ist als die Filterfeinheit des zwischen dem ersten Anschluss und der Rücklauf- oder Tankseite angeordneten ersten Filterelements. Dadurch ist auch in den Betriebsphasen, bei denen der Leckölanschluss vom Anschluss am feinfiltrierenden Arbeitsfilter getrennt ist, eine Filtration des Lecköls gegeben, wobei durch eine gröbere Filterfeinheit des hierbei wirksamen zweiten Filterelements ein schädlicher Anstieg des Lecköldrucks vermieden ist.

Mit besonderem Vorteil kann die Steuereinheit ein drittes Rückschlagventil aufweisen, das bei Überschreiten eines vorgebbaren Höchstwertes des Arbeitsdruckes am ersten Anschluss diesen mit dem weiteren Anschluss verbindet und dadurch über das zweite Filterelement einen Bypass zum ersten Filterelement bildet.

Mit besonderem Vorteil kann auch für das zweite Filterelement ein dieses umgehender weiterer Bypass gebildet sein, indem ein viertes Rückschlagventil vorgesehen ist, das durch den am zweiten Anschluss anstehenden Druck öffnet. Als sog. "Last chance filter" kann in dem weiteren Bypass ein Grobsieb angeordnet sein.

Bei vorteilhaften Ausführungsbeispielen kann für eine Einspeisung von gefiltertem Hydraulikfluid zu hydrostatischen Komponenten, wie Speisepumpen, ein Versorgungsanschluss mit der Reinseite von zumindest dem ersten und/oder dem zweiten Filterelement verbunden sein.

Für die Sicherheit der Versorgung derartiger Komponenten über den Versorgungsanschluss kann mit besonderem Vorteil die Anordnung so getroffen sein, dass die Reinseite des ersten und/oder zweiten Filterelements und damit der Versorgungsanschluss mit einem Tank über eine Nachsaugeinrichtung verbunden sind, die ein fünftes Rückschlagventil als Nachsaugventil und ein sechstes Rückschlagventil für eine gewünschte Vorspannung des am Versorgungsanschluss anstehenden Hydraulikfluids aufweist.

Hierbei ist eine hohe Systemreinheit gewährleistet, wenn die Nachsaugeinrichtung ein mit dem fünften Rückschlagventil in Reihe geschaltetes Nachsaugfilter aufweist, das entsprechende Nachsaugmengen filtriert.

In besonders vorteilhafter Weise kann die Filtervorrichtung ein eine Längsachse definierendes Filtergehäuse aufweisen, in dem ein erstes als Feinstfilter dienendes und ein zweites Filterelement in Form eines gröberen Schutzfilters in Hintereinanderanordnung und miteinander zusammenhängend aufnehmbar sind. Durch die Anordnung beider Filter in einem gemeinsamen Gehäuse ist nicht nur eine kompakte Bauweise realisierbar, sondern die Vorrichtung ist auch wartungsfreundlich betreibbar, da bei Filterwechseln lediglich ein Bauelement ausgetauscht werden muss.

Vorteilhafte weitere Ausgestaltungen der Filtervorrichtung sind in diesbezüglichen Unteransprüchen 10 bis 23 angegeben.

Nachstehend ist die Erfindung anhand der Zeichnung im Einzelnen erläutert. Es zeigen:
- Fig. 1: ein Schaltbild der hydraulischen Komponenten eines ersten Ausführungsbeispiels der erfindungsgemäßen Filtervorrichtung;
- Fig. 2-4: entsprechende Schaltbilder weiterer Ausführungsbeispiele der Erfindung;
- Fig.5: ein Schaltbild eines nicht erfindungsgemäßen Beispiels;
- Fig. 6: eine Vorderansicht des Filtergehäuses eines Ausführungsbeispiels der erfindungsgemäßen Filtervorrichtung;
- Fig. 7: einen Längsschnitt des Filtergehäuses des Ausführungsbeispiels von Fig. 6;
- Fig. 8: eine gegenüber Fig. 7 vergrößert gezeichnete, perspektivische Schrägansicht des aus zwei Filterelementen kombinierten Filtereinsatzes des Ausführungsbeispiels von Fig. 6 und 7;
- Fig. 9: eine gegenüber Fig. 7 und 8 vergrößert und in Längsrichtung aufgeschnitten gezeichnete perspektivische Schrägansicht lediglich des einem abnehmbaren Kopfteil benachbarten Teils des Ausführungsbeispiels von Fig. 6 und 7;
- Fig. 10 und 11: in der der Fig. 9 entsprechenden Darstellungsweise das mittlere Gehäuseteil bzw. den einem Bodenteil des Gehäuses benachbarten Teil des Ausführungsbeispiels von Fig. 6 und 7;
- Fig. 12: eine der Fig. 6 entsprechende Vorderansicht des Filtergehäuses eines weiteren Ausführungsbeispiels der erfindungsgemäßen Filtervorrichtung;
- Fig. 13: einen der Fig. 7 entsprechenden Längsschnitt des Filtergehäuses des Ausführungsbeispiels von Fig. 12;
- Fig. 14: in einer der Fig. 9 entsprechenden Darstellungsweise lediglich den an das Kopfteil angrenzenden Abschnitt des Ausführungsbeispiels gemäß Fig. 13; und
- Fig. 15: in einer der Fig. 11 entsprechenden Darstellungsweise lediglich den dem Bodenteil des Gehäuses benachbarten Teil des Ausführungsbeispiels von Fig. 13 und 14.

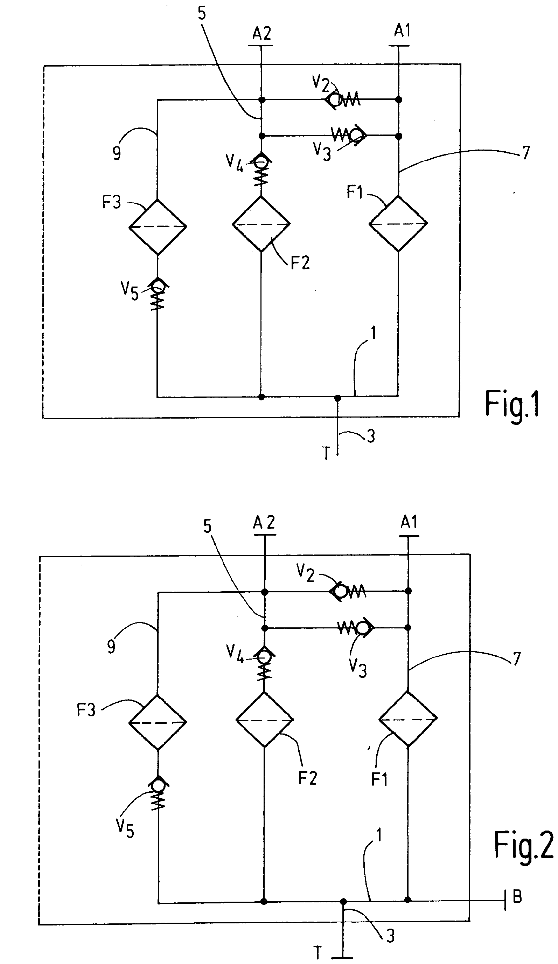

In dem in Fig. 1 dargestellten Schaltungsbeispiel ist ein Anschluss, zu dem eine Fluid-Rücklaufmenge von einer nicht dargestellten Arbeitshydraulik zugeführt wird, mit A1 bezeichnet. Für die Feinstfiltration der Rücklaufmenge ist der Anschluss A1 mit einem Filterelement F1 mit einer Filterfeinheit im Bereich von 5 bis 10 µm verbunden, dessen Reinseite 1 zu einer Tankseite 3 führt. Über einen zweiten Anschluss A2 wird Lecköl zugeführt, das beim Betrieb von hydrostatischen Antrieben (nicht dargestellt) für die betreffenden Arbeitshydrauliken anfällt. Die mit diesem Leckölanschluss A2 verbundene Leckölleitung 5 ist über ein Rückschlagventil V₂ mit dem Anschluss A1 und dadurch mit der Rohseite 7 des Filterelements F1 verbunden. Das federbelastete Rückschlagventil V₂ öffnet vom Anschluss A2 zum Anschluss A1 hin bei einem geringen Öffnungsdruck, beispielsweise bei etwa 0,03 bar. Die Leckölleitung 5 ist über ein weiteres, federbelastetes Rückschlagventil V₄ mit der Rohseite eines als Lecköl-Schutzfilter dienenden zweiten Filterelements F2 verbunden, das reinseitig mit der Tankseite 3 in Verbindung ist. Das Rückschlagventil V₄ ist als Druckbegrenzungsventil für die Leckölleitung 5 beispielsweise auf einen Öffnungsdruck von 0,5 bar eingestellt, um den Druck der Leckölleitung 5 auf diesen Lecköldruck zu begrenzen. Für den Betrieb bilden die Rückschlagventile V₂ und V₄ eine Steuereinrichtung, die die Filtration anfallender Leckölmengen derart gestaltet, dass bei Betriebsphasen, bei denen der Arbeitsdruck am Anschluss A1 geringer ist als der Lecköldruck am Anschluss A2 über das geöffnete Rückschlagventil V₂ die Leckölmenge über das Filterelement F1 feinstgefiltert wird. Wenn der Arbeitsdruck am Anschluss A1 bedingt durch große Rücklaufmengen, durch hohe Viskositäten oder durch Verschmutzung am Filterelement F1 ansteigt, schließt das Ventil V₂, und bei einem Lecköldruck am Anschluss A2, der den Öffnungsdruck des weiteren Rückschlagventils V₄, im vorliegenden Fall 0,5 bar, übersteigt, wird das Lecköl aus der Leckölleitung 5 über das zweite Filterelement F2 filtriert, das als Schutzfilter auf eine gröbere Filterfeinheit, beispielsweise 40 µm, ausgelegt ist, so dass sich in der Leckölleitung 5 kein schädlicher Lecköldruck aufbaut.

Der Arbeitsanschluss A1 und damit das feinfiltrierende Filterelement F1 ist über einen Bypass abgesichert, der durch ein weiteres Rückschlagventil V₃ zwischen den Anschlüssen A1 und A2 gebildet ist, das beispielsweise auf einen Öffnungsdruck von 4 bar eingestellt ist. Bei Öffnen dieses Rückschlagventils V₃ wird eine entsprechende Bypassmenge über das sich öffnende Rückschlagventil V₄ und das gröbere Schutzfilter F2 filtriert. Das Schutzfilter F2 seinerseits ist über einen weiteren, vom Leckölanschluss A2 ausgehenden Bypass 9 abgesichert, der über ein Grobsieb F3, beispielsweise mit einer Feinheit von 500 µm als Last-chance-Filter, über ein auf einen Öffnungsdruck von etwa 2,0 bar eingestelltes, federbelastetes Rückschlagventil V₅ zur Reinseite 1 und damit zur Tankseite 3 verläuft.

Das Schaltungsbeispiel von Fig. 2 entspricht demjenigen von Fig. 1, abgesehen davon, dass an der Reinseite 1 ein Versorgungsanschluss B für eine Versorgung hydraulischer Komponenten mit filtriertem Arbeitsfluid vorgesehen ist, beispielsweise eine Speisepumpe nachgeschalteter Hydrostaten.

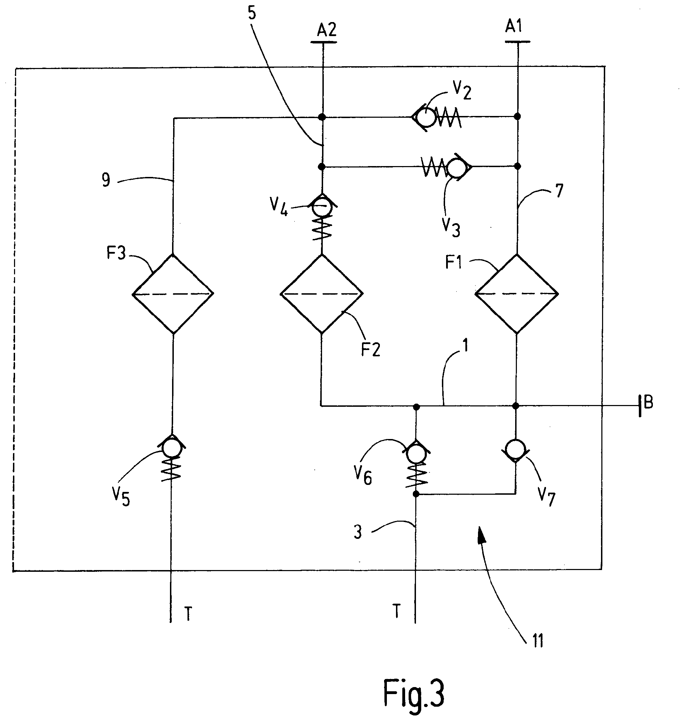

Bei dem Schaltungsbeispiel von Fig. 3 ist als Weiterbildung der Schaltung von Fig. 2 eine Nachsaugeinrichtung 11 vorgesehen, um eine etwaige Minderversorgung am Versorgungsanschluss B auszuschließen. Die Nachsaugeinrichtung 11 weist ein unbelastetes Rückschlagventil V₇, das bei am Versorgungsanschluss B herrschendem Unterdruck die Tankseite 3 mit dem Versorgungsanschluss B verbindet, sowie ein federbelastetes Rückschlagventil V₆ auf, das als Vorspannventil die Reinseite 1 und damit den Versorgungsanschluss B auf einen Versorgungsdruck von 0,5 bar vorspannt.

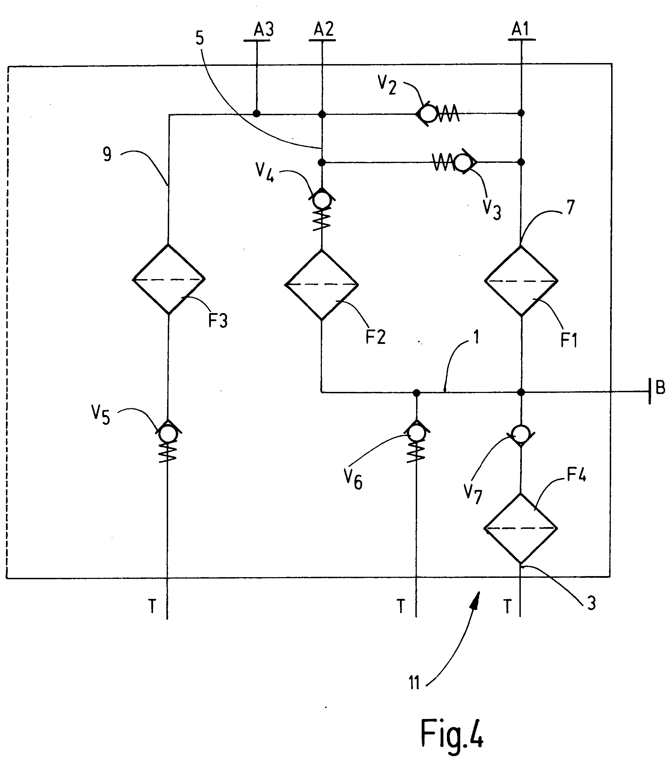

Das Schaltungsbeispiel von Fig. 4 entspricht demjenigen von Fig. 3, abgesehen davon, dass zwischen dem das Nachsaugventil bildenden Rückschlagventil V₇ und dem Tank T ein Nachsaugfilter F4 eingefügt ist, beispielsweise mit einer Filterfeinheit von 100 µm. Außerdem ist für die Zufuhr von aus einem weiteren geschlossenen hydraulischen Kreislauf kommendem Lecköl ein zusätzlicher Leckölanschluss A3 parallel zum ersteren Leckölanschluss A2 vorgesehen.

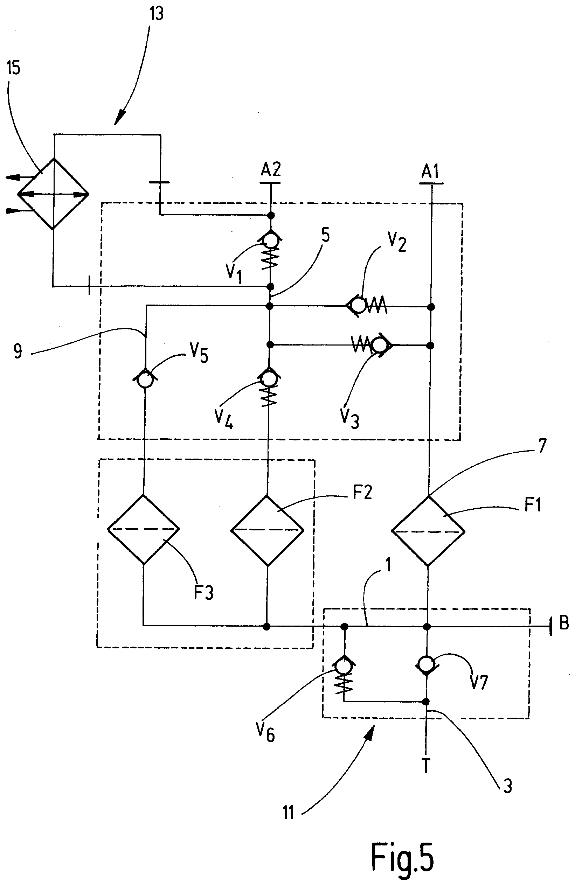

Das Schaltbild gemäß Fig. 5 ist nicht erfindungsgemäß, es entspricht dem Schaltungsbeispiel von Fig. 3, abgesehen davon, dass der Leckölanschluss A2 nicht unmittelbar mit der über das Rückschlagventil V₄ zum Schutzfilter F2 führenden Leckölleitung 5 in Verbindung ist, sondern dass die anfallenden Leckölmengen über einen externen Leckölkühlerkreis 13 mit einem Wärmetauscher 15 geleitet sind, wobei der Wärmetauscher 15 durch ein federbelastetes Rückschlagventil V₁ mit einem Öffnungsdruck von 1,0 bar abgesichert ist.

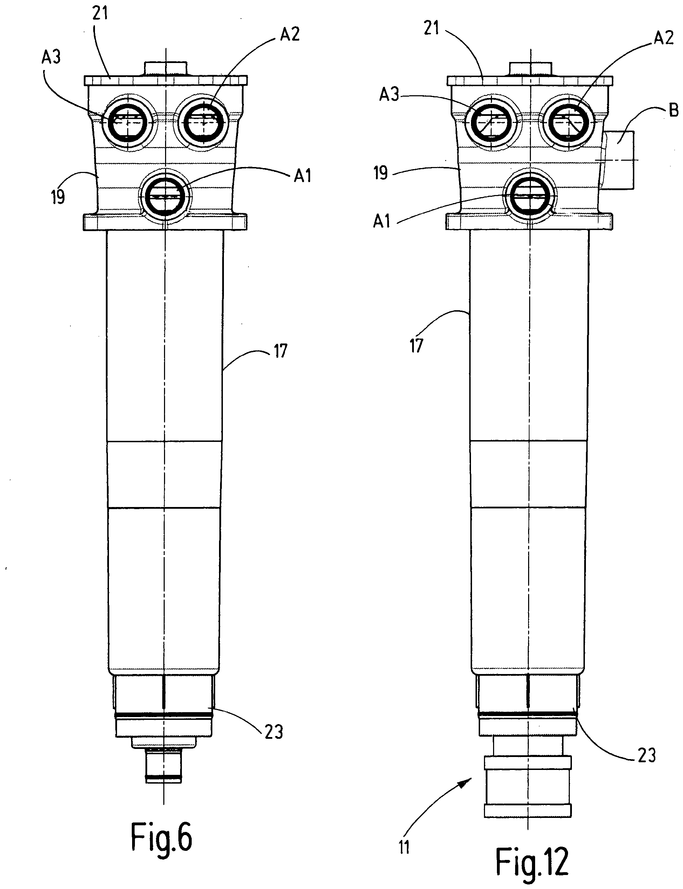

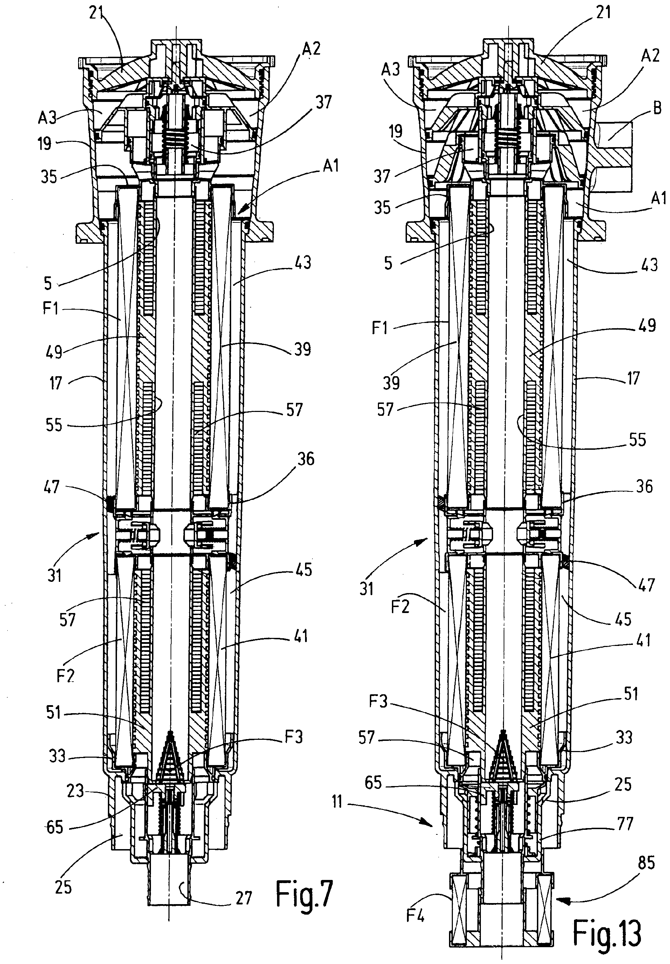

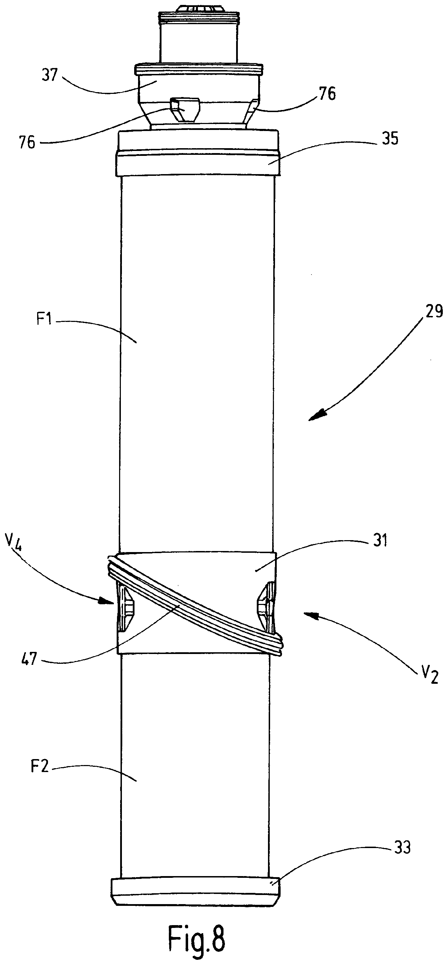

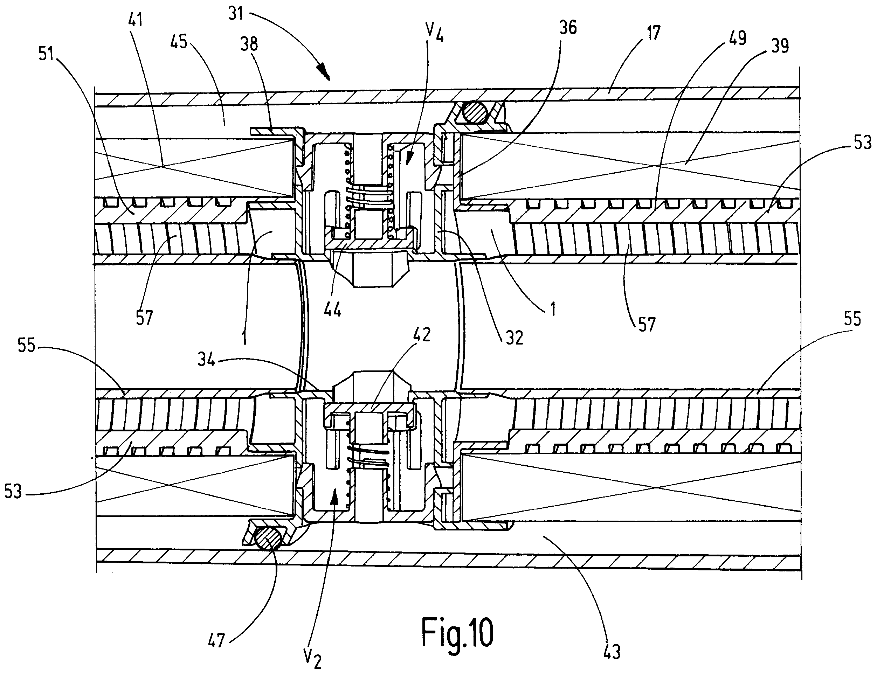

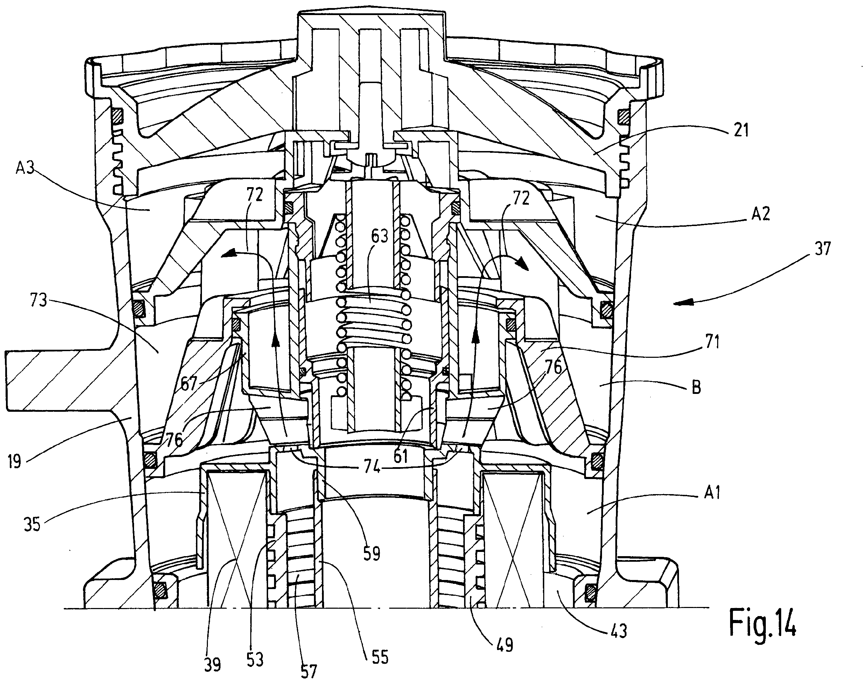

Die Fig. 6 und 7 zeigen in Vorderansicht bzw. im Längsschnitt ein Ausführungsbeispiel der erfindungsgemäßen Filtervorrichtung, wobei die dem Schaltbild von Fig. 1 entsprechende Hydraulikschaltung realisiert ist. Das Ausführungsbeispiel weist ein kreiszylinderförmiges Filtergehäuse 17 und ein dessen oberes, offenes Ende dicht abschließendes Kopfteil 19 auf, das wiederum durch einen Schraubdeckel 21 geschlossen ist. Am anderen, unteren Ende bildet das Gehäuse 17 ein Bodenteil 23 mit Ausgängen 25, 27 zu einem zugehörigen Tank. Im Filtergehäuse 17 ist ein Filtereinsatz 29 austauschbar aufnehmbar, wie er in Fig. 8 gesondert dargestellt ist und der das als Feinstfilter dienende Filterelement F1 und das gröbere Schutzfilter F2 in koaxialer Hintereinanderanordnung aufweist. Die Filterelemente F1 und F2 sind, wie am deutlichsten aus Fig. 10 zu ersehen ist, durch einen zwischen sie eingesetzten Ventileinsatz 31 mechanisch sowie fluidführend verbunden. Eine Endkappe am unteren Ende des Schutzfilters F2 und eine Endkappe am oberen Ende des Feinstfilters F1 sind mit 33 bzw. 35 bezeichnet. Mit dem oberen Ende der oberen Endkappe 35 ist eine Bypass-Ventileinrichtung 37 verbunden. Der Filtereinsatz 29 von Fig. 8 wird sowohl bei dem Ausführungsbeispiel von Fig. 6, 7 und 9 bis 11 benutzt, als auch bei einem weiteren Ausführungsbeispiel gemäß Fig. 12 bis 15, auf das später eingegangen wird.

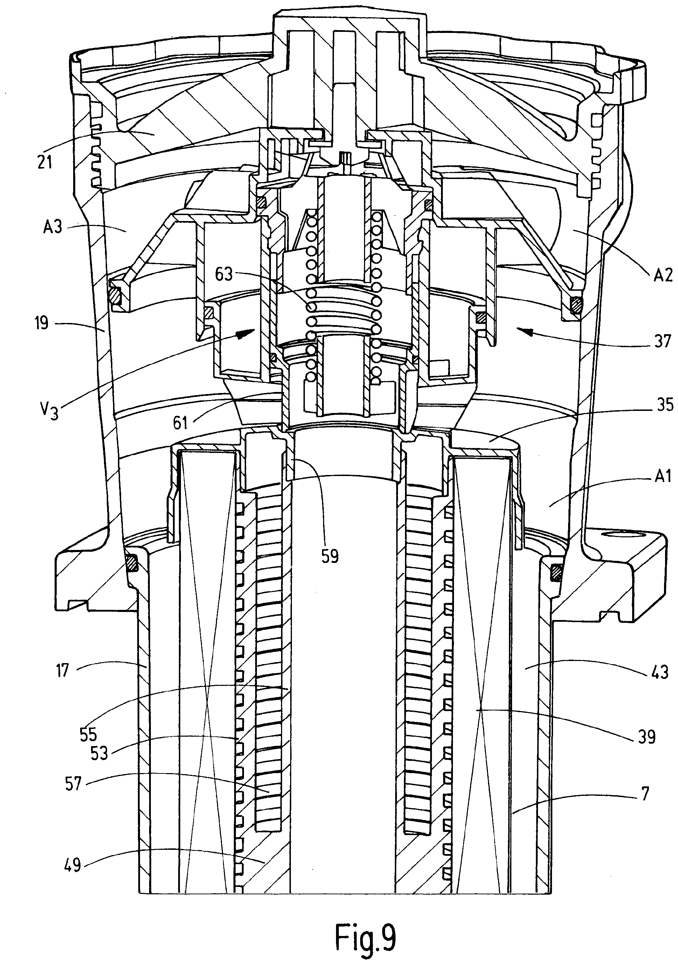

Wie Fig. 6 zeigt, sind am Kopfteil 19 der die Rücklaufmenge aus einem (nicht gezeigten) offenen Hydraulikkreislauf aufnehmende Arbeitsanschluss A1 sowie oberhalb von diesem angeordnete, zueinander parallel geschaltete Anschlüsse A2 und A3 für anfallende Leckölmengen angeordnet. Die im Kopfteil 19, Gehäuse 17 und Bodenteil 23 verlaufenden Fluidwege, die von den Anschlüssen A1 und A2, A3 ausgehen, sind den Fig. 9, 10 und 11 am deutlichsten entnehmbar. Wie gezeigt, ist die Außenseite der Filtermedien 39 und 41 der Filterelemente F1 bzw. F2 jeweils in einem Abstand von der Innenwand des Gehäuses 17. Dadurch sind an der Außenseite des oberen Filterelements F1 ein erster Fluidraum 43 und an der Außenseite des unteren Filterelements F2 ein zweiter Fluidraum 45 gebildet. Der erste Fluidraum 43 ist mit dem die Rücklaufmengen führenden Arbeitsanschluss A1 (siehe Fig. 9) in Verbindung, d.h. der erste Fluidraum 43 bildet bei der Filtration die Rohseite 7 am Filterelement F1. Erster oberer Fluidraum 43 und zweiter unterer Fluidraum 45 sind durch eine Dichtungsanordnung voneinander getrennt, die einen Dichtring 47 aufweist, der, wie Fig. 10 zeigt, den Ventileinsatz 31 gegen die Innenwand des Ventilgehäuses 17 abdichtet. Im Ventileinsatz 31 befinden sich, zueinander diametral angeordnet, das Rückschlagventil V₂ sowie das Rückschlagventil V₄. Wie den Fig. 8 und 10 in Kombination entnehmbar ist, verläuft der Dichtring 47 im Schrägverlauf derart, dass der erste, obere Fluidraum 43 zum unteren Filterelement F2 hin über das Rückschlagventil V₂ hinaus nach unten verlängert ist, während der untere, zweite Fluidraum 45 über das andere Rückschlagventil V₄ hinaus nach oben verlängert ist. Wie ebenfalls aus den Fig. 8 und 10 ersichtlich ist, ist der schräg verlaufende Dichtring 47 an der Ventilplatte 31 in einem umlaufenden Ringspalt aufgenommen, der durch zwei vorspringende Rippen seitlich begrenzt ist, durch die der Dichtring 47 eingefasst ist. Diese vorspringenden Rippen bilden eine Abstützung gegen die Innenwand des Ventilgehäuses 17 und dadurch eine Sicherung gegen durch unterschiedlich hohe Drücke in den angrenzenden Kammern erzeugte Querkräfte.

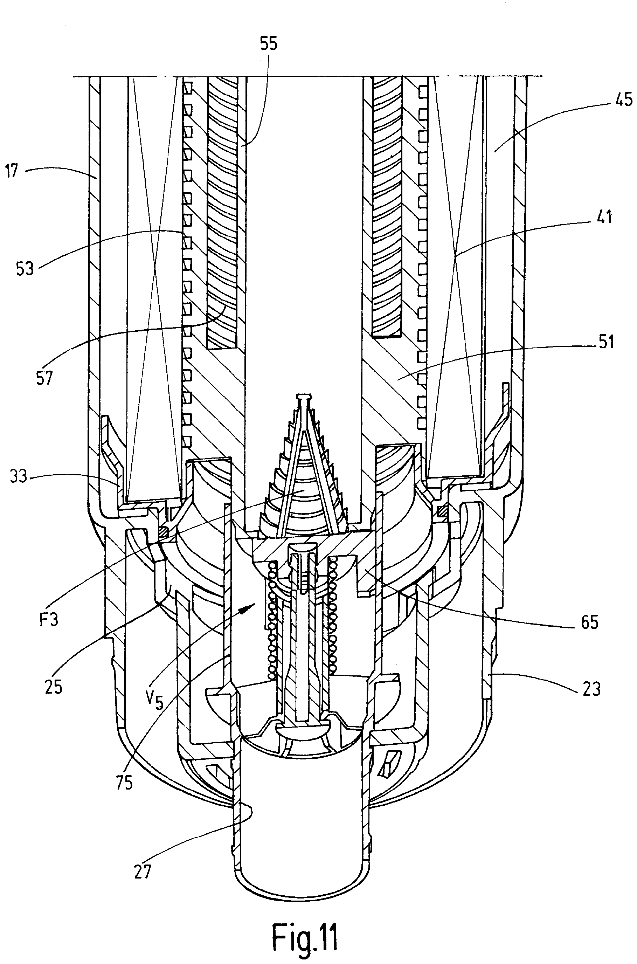

Bei beiden Filterelementen F1 und F2 umgibt das Filtermedium 39 bzw. 41 einen Stützkörper 49 bzw. 51. Diese weisen jeweils eine fluiddurchlässige Außenwand 53 und eine in einem Abstand davon angeordnete geschlossene Innenwand 55 auf, die zwischen sich einen Raum 57 bilden, der als Reinseite 1 die vom zweiten Filterelement F2 gefilterte Hydraulikflüssigkeit aufnimmt. Die geschlossene Innenwand 55 der Stützkörper 49, 51 bildet über eine durch den Ventileinsatz 31 gebildete Verbindung ein Innenrohr als durchgehender Fluidweg vom Kopfteil 19 bis zum Bodenteil 23. Über eine Öffnung 59 (Fig. 9) in der oberen Endkappe 35 des Filterelements F1 ist der Fluidweg in diesem Innenrohr über einen inneren Durchgang in der Bypass-Ventileinrichtung 37 mit dem Leckölanschluss A2, A3 im Kopfteil 19 in Fluidverbindung, bildet also ein Teil der Leckölleitung 5, siehe Fig. 1 bis 5. Bei einem 0,5 bar übersteigendem Lecköldruck öffnet das im Ventileinsatz 31 befindliche Rückschlagventil V₄ durch Abheben seines Schließkörpers 44 zum zweiten, unteren Fluidraum 45 hin. Dadurch ist der Anschluss A2 mit der Außenseite des als Schutzfilter dienenden zweiten Filterelements F2, also dessen Rohseite, verbunden. Über das Filtermedium 41 des Filterelements F2 gelangt das Fluid zum Raum 57 und damit wiederum zur Reinseite 1. Die jeweiligen reinseitigen Räume 57 im Inneren der Stützkörper 49 und 51 beider Filterelemente F1, F2 sind durch Umströmen des Ventileinsatzes 31 miteinander in Verbindung, bilden also gemeinsam die zum Bodenteil 23 führende Reinseite 1. Gemäß Fig. 10 weist der Ventileinsatz 31 als Ventilgehäuse der Rückschlagventile V₂ und V₄ einen Hülsenkörper 32 mit einem zentralen Durchgang 34 auf, der das von den Innenwänden 55 der Stützkörper 49, 51 gebildete Innenrohr fortsetzt. Der Ventileinsatz 31 bildet auf einer Seite eine Aufnahme für die angrenzende Endkappe 36 des oberen Filterelements F1 und auf der anderen Seite eine das Filtermedium 41 des unteren Filterelements F2 einfassende Endkappe 38 für dieses. Wie die Fig. 11 am deutlichsten zeigt, ist der reinseitige Raum 57 des unteren Stützkörpers 51 über die Ausgänge 25 im Bodenteil 23 zum Tank hin offen.

Im Kopfteil 19 kann das federbelastete Rückschlagventil V₃ der Bypass-Ventilanordnung 37 einen Durchgang vom Arbeitsanschluss A1 zur Öffnung 59 an der Endkappe 35 des Filterelements F1 freigeben. Dies erfolgt, wenn ein Druckanstieg am Anschluss A1 einen hülsenartigen Schließkörper 61 gegen die auf einen Öffnungsdruck von 4 bar eingestellte Kraft einer Ventilfeder 63 vom Rand der Öffnung 59 der Endkappe 35 abhebt, siehe Fig. 9.

Ein weiterer Bypass, in Fig. 1 bis 5 mit 9 bezeichnet, ist am unteren Ende des durch die Innenwand 55 der Stützkörper 49, 51 gebildeten Innenrohres, durch einen federbelasteten Schließkörper 65 des Rückschlagventils V₅ gebildet, das auf einen Öffnungsdruck von 1,5 bar eingestellt ist. Der Schließkörper 65 ist in einem den bodenseitigen Ausgang 27 bildenden Rohrstück 75 im Bodenteil 23 geführt. An dem vom Schließkörper 65 verschließbaren Ende des durch die Innenwand des Stützkörpers 51 gebildeten Rohres befindet sich als Last-chance-Filter das Filterelement F3 in Form eines Grobsiebes.

Bei dem weiteren Ausführungsbeispiel von Fig. 12 bis 15 ist die Schaltungsvariante von Fig. 3 realisiert. Wie Fig. 12 und 13 zeigen, ist am Kopfteil 19 des Filtergehäuses 17 zusätzlich zu den Anschlüssen A1, A2 und A3 der Versorgungsanschluss B auf halber Höhe zwischen Anschluss A1 und den Anschlüssen A2 und A3, zu diesen um 90° versetzt, angeordnet. Bei diesem Ausführungsbeispiel ist der Mittelabschnitt des Filtergehäuses 17 gleich ausgebildet wie beim ersten Ausführungsbeispiel, entspricht also der Darstellung von Fig. 10. Das Kopfteil 19 ist jedoch unterschiedlich gestaltet und weist zwischen der Innenwand des Kopfteils 19 und einem hohlzylinderförmigen Ansatz 67 der Endkappe 35, welcher das Ventilgehäuse 69 der Bypass-Ventileinrichtung 37 in einem Abstand umgibt, eine Trennwand 71 auf, die im Kopfteil 19 den Raum, in den der Anschluss A1 mündet, von dem Raum fluiddicht trennt, in den die Anschlüsse A2, A3 einmünden, so dass ein mittlerer Raum 73 gebildet ist, in den der Versorgungsanschluss B einmündet. Wie mit Strömungspfeilen 72 angedeutet, verläuft aus dem reinseitigen Raum 57 des Stützkörpers 49 des Filterelements F1 über Durchgänge 74 in der Endkappe 35 ein Fluidweg zu dem Raum 73 über Fluidführungen im Ansatz 67 der Endkappe 35, wobei Kanäle 76 umgangen werden. Letztere bilden bei einem Ansprechen der Bypass-Ventileinrichtung 67 bei einem Abheben des Schließkörpers 61 einen Fluidweg von der Öffnung 59 der Endkappe 35 zu dem Raum des Anschlusses A1.

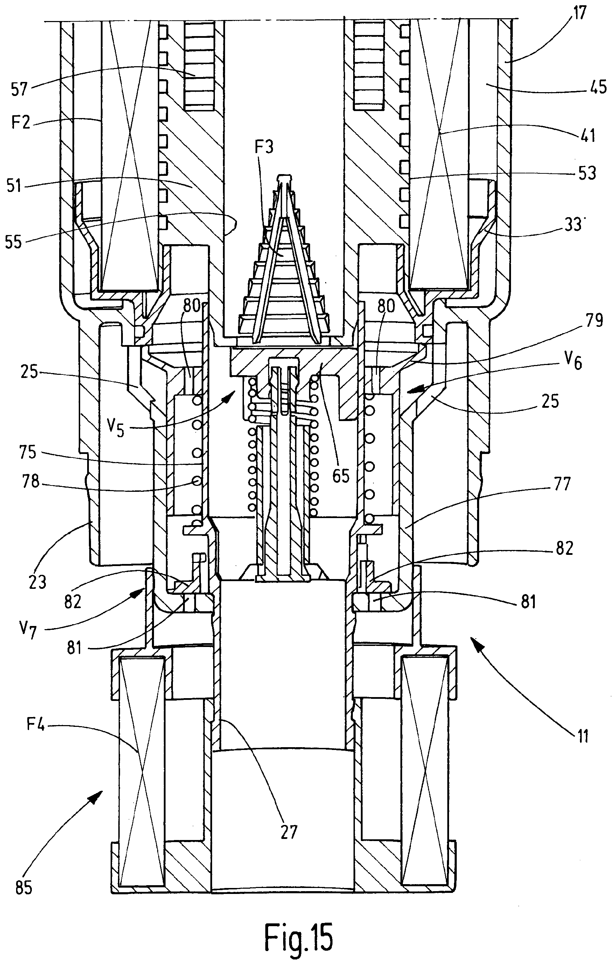

Bei diesem Ausführungsbeispiel ist auch das Bodenteil 23 gegenüber dem vorigen Beispiel abgewandt, siehe Fig. 15. Das das Innenrohr des Filterelements F2 verlängernde, den tankseitigen Ausgang 27 bildende Rohr 75, das das Rückschlagventil V₅ umgibt, bildet zusammen mit einem koaxialen Zylinderteil 77, der das Rohr 75 in einem Abstand umgibt, ein Federgehäuse für die Schließfeder des ein Vorspannventil bildenden Rückschlagventils V₆. Dessen Schließkörper 79, der in dem Federgehäuse verschiebbar geführt ist, bildet in der Schließstellung eine Abdichtung des reinseitigen Raums 57 des Filterelements F2, wobei jedoch im Schließkörper 79 Durchlässe 80 gebildet sind. Der Boden des Zylinderteils 77 weist außer dem Durchgang für das Rohr 75 Durchlässe 81 als Nachsaugöffnungen der Nachsaugeinrichtung 11 auf, die zusammen mit zugeordneten Schließkörpern 82 ein unbelastetes Rückschlagventil V₇ als Nachsaugventil bilden. An dem die Durchlässe 81 aufweisenden Boden des Zylinderteils 77 schließt sich die Reinseite einer Nachsaugfiltereinrichtung 85 mit der Reinseite ihres Filterelements F4 an.

Bei einem Betrieb der Filtervorrichtung, wobei das Bodenteil 23 in einen Tank derart eingetaucht ist, dass die die Nachsaugöffnungen bildenden Durchlässe eingetaucht sind, ist im Normalfall, bei dem kein Nachsaugbedarf gegeben ist, das Nachsaugventil V₇ durch Druckbeaufschlagung über die Durchlässe 80 geschlossen. Durch Einfluss der Schließfeder 78 ist der Schließkörper 79 des Vorspannventils V₆ in der Schließstellung, so dass die Verbindung zwischen dem reinseitigen Raum 57, also der Reinseite 1, zur Tankseite hin über die Ausgänge 25 gesperrt ist. Sobald der gewünschte Vorspanndruck, d.h. der Versorgungssystemdruck für den Versorgungsanschluss B, im vorliegenden Fall von 0,5 bar, erreicht ist, öffnet das Vorspannventil V₆, so dass der Schließkörper 79 die Verbindung zwischen dem reinseitigen Raum 57 und den Ausgängen 25 freigibt. Bei einem im reinseitigen Raum 57 herrschenden Minderdruck und dadurch geschlossenem Vorspannventil V₆ hebt der Schließkörper 82 des Nachsaugventils V₇ ab, so dass ein Nachsaugstrom vom Filterelement F4 her über das Federgehäuse und die Durchlässe 80 im Schließkörper 79 des Vorspannventils V₆ einströmt. Bei normalen Betriebszuständen, bei denen kein Nachsaugbedarf gegeben ist, entspricht die Funktionsweise des Ausführungsbeispiels derjenigen des zuvor beschriebenen Beispiels.

## Patentansprüche

1. Filtervorrichtung mit mindestens einem ersten Anschluss (A1) an einem hydraulischen Arbeitskreislauf, dem ein Filterelement (F1) zugeordnet ist, und mit mindestens einem weiteren Anschluss (A2), über den Leckölmengen hydraulischer Komponenten zuführbar sind, wobei eine Steuereinrichtung (V₂) vorgesehen ist, mittels deren bei Unterschreiten eines vorgebbaren Arbeitsdruckes des Arbeitskreislaufs am ersten Anschluss (A1) die Leckölmengen vom weiteren Anschluss (A2) zu dem Filterelement (F1) zuführbar sind, wobei die Steuereinrichtung eine Ventilanordnung mit zumindest einem Rückschlagventil (V₂) aufweist, das bei einem am weiteren Anschluss (A2) herrschenden Lecköldruck, der den Arbeitsdruck am ersten Anschluss (A1) übersteigt, den weiteren Anschluss (A2) mit dem ersten Anschluss (A1) verbindet, **dadurch gekennzeichnet, dass** die Steuereinrichtung ein mit dem weiteren Anschluss (A2) direkt verbundenes zweites Rückschlagventil (V₄) aufweist, das bei Übersteigen eines gewünschten Bereichs der Höhe des Lecköldrucks öffnet und den weiteren Anschluss (A2) mit einem zu einer Rücklauf- oder Tankseite (T) führenden Leitungszweig verbindet.

2. Filtervorrichtung nach einem der vorstehenden Ansprüche, **dadurch gekennzeichnet, dass** in dem vom zweiten Rückschlagventil (V₄) zur Rücklauf- oder Tankseite (T) führenden Leitungszweig ein zweites Filterelement (F2) mit einer Filterfeinheit vorgesehen ist, die gröber ist als die Filterfeinheit des zwischen dem ersten Anschluss (A1) und der Rücklauf- oder Tankseite (T) angeordneten ersten Filterelements (F1).

3. Filtervorrichtung nach Anspruch 2, **dadurch gekennzeichnet, dass** die Steuereinrichtung ein drittes Rückschlagventil (V₃) aufweist, das bei Überschreiten eines vorgebbaren Höchstwertes des Arbeitsdruckes am ersten Anschluss (A1) diesen mit dem weiteren Anschluss (A2) verbindet und dadurch über das zweite Filterelement (F2) einen Bypass zum ersten Filterelement (F1) bildet.

4. Filtervorrichtung nach Anspruch 2 oder 3, **dadurch gekennzeichnet, dass** ein das zweite Filterelement (F2) umgehender, zur Rücklauf- oder Tankseite (T) führender weiterer Bypass ein durch den am zweiten Anschluss (A2) anstehenden Druck öffnendes viertes Rückschlagventil (V₅) aufweist.

5. Filtervorrichtung nach Anspruch 4, **dadurch gekennzeichnet, dass** in dem weiteren Bypass ein Grobsieb (F3) angeordnet ist.

6. Filtervorrichtung nach einem der Ansprüche 2 bis 5, **dadurch gekennzeichnet, dass** für eine Einspeisung von gefiltertem Hydraulikfluid zu hydrostatischen Komponenten, wie Speisepumpen, ein Versorgungsanschluss (B) mit der Reinseite (1) von zumindest dem ersten (F1) und/ oder dem zweiten Filterelement (F2) verbunden ist.

7. Filtervorrichtung nach Anspruch 6, **dadurch gekennzeichnet, dass** die Reinseite (1) des ersten (F1) und/oder zweiten Filterelements (F2) und damit der Versorgungsanschluss (B) mit einem Tank (T) über eine Nachsaugeinrichtung (11) verbunden sind, die ein fünftes Rückschlagventil (V₇) als Nachsaugventil und ein sechstes Rückschlagventil (V₆) für eine gewünschte Vorspannung des am Versorgungsanschluss (B) anstehenden Hydraulikfluids aufweist.

8. Filtervorrichtung nach Anspruch 7, **dadurch gekennzeichnet, dass** die Nachsaugeinrichtung (11) ein mit dem fünften Rückschlagventil (V₇) in Reihe geschaltetes Nachsaugfilter (F4) aufweist.

9. Filtervorrichtung nach einem der Ansprüche 2 bis 8, **dadurch gekennzeichnet, dass** sie ein eine Längsachse definierendes Filtergehäuse (17) aufweist, in dem erstes (F1) und zweites Filterelement (F2) in koaxialer Hintereinanderanordnung und miteinander zusammenhängend aufnehmbar sind.

10. Filtervorrichtung nach einem der Ansprüche 2 bis 9, **dadurch gekennzeichnet, dass** das erste Filterelement (F1) einem abnehmbaren Kopfteil (19) und das zweite Filterelement (F2) einem Bodenteil (23) des Gehäuses (17) benachbart sind.

11. Filtervorrichtung nach Anspruch 10, **dadurch gekennzeichnet, dass** im Gehäuse (17) zwischen dessen Innenseite und der Außenseite des Filtermediums (39, 41) von erstem (F1) und zweitem Filterelement (F2) Fluidräume (43, 45) gebildet sind, die durch eine Dichtungsanordnung (47), die an den Filterelementen (F1, F2) an deren Übergangsbereich vorgesehen ist, in einen dem ersten Filterelement (F1) zugeordneten oberen Fluidraum (43) und einen dem zweiten Filterelement (F2) zugeordneten unteren Fluidraum (45) getrennt sind.

12. Filtervorrichtung nach Anspruch 11, **dadurch gekennzeichnet, dass** am Übergangsbereich der Filterelemente (F1, F2) die Rückschlagventile (V₂ und V₄) der Steuereinrichtung angeordnet sind.

13. Filtervorrichtung nach Anspruch 11 oder 12, **dadurch gekennzeichnet, dass** das außenliegende Filtermedium (39, 41) der Filterelemente (F1, F2) einen Stützkörper (49, 51) umgibt, der zwischen seiner fluiddurchlässigen Außenwand (53) und einer geschlossenen Innenwand (55) für beide Filterelemente (F1, F2) den Raum (57) bildet, der als Reinseite (1) die gefilterte Hydraulikflüssigkeit aufnimmt.

14. Filtervorrichtung nach Anspruch 13, **dadurch gekennzeichnet, dass** die geschlossene Innenwand (55) der Stützkörper (49, 51) ein Innenrohr für einen vom Kopfteil (19) bis zum Bodenteil (23) durchgehenden Fluidweg bildet.

15. Filtervorrichtung nach Anspruch 13 oder 14, **dadurch gekennzeichnet, dass** am Kopfteil (19) die Anschlüsse (A1 und A2) sowie Fluidführungen vorgesehen sind, über die der erste Anschluss (A1) mit dem oberen Fluidraum (43) und der zweite Anschluss (A2) mit dem Fluidweg im durch die Innenwand (55) der Stützkörper (49, 51) gebildeten Innenrohr in Verbindung sind.

16. Filtervorrichtung nach einem der Ansprüche 10 bis 15, **dadurch gekennzeichnet, dass** im Kopfteil (19) das den druckbetätigbaren Bypass (37) für das erste Filterelement (F1) bildende dritte Rückschlagventil (V₃) zwischen den Anschlüssen (A1) und (A2) angeordnet ist.

17. Filtervorrichtung nach einem der Ansprüche 13 bis 16, **dadurch gekennzeichnet, dass** der reinseitige Raum (57) im Inneren der Stützkörper (49, 51) über Fluidwege (25, 27) im Bodenteil (23) mit der Rücklauf- oder Tankseite (T) in Verbindung ist.

18. Filtervorrichtung nach einem der Ansprüche 13 bis 17, **dadurch gekennzeichnet, dass** im Bodenteil (23) das dem weiteren Bypass zugehörige vierte Rückschlagventil (V₅) derart angeordnet ist, dass es das Innenrohr in den Stützkörpern (49, 51) normalerweise schließt oder druckbetätigt einen zur Rücklauf- oder Tankseite (T) führenden Auslass des Innenrohres freigibt.

19. Filtervorrichtung nach Anspruch 18, **dadurch gekennzeichnet, dass** das dem weiteren Bypass zugehörige Grobsieb (F3) am Ende des Innenrohres dem vierten Rückschlagventil (V₅) vorgeschaltet ist.

20. Filtervorrichtung nach einem der Ansprüche 13 bis 19, **dadurch gekennzeichnet, dass** das Nachsaugventil der Nachsaugeinrichtung (11) in Form des fünften Rückschlagventils (V₇) an Ausgängen (81) des Bodenteils (23) vorgesehen ist, die von der Reinseite (1, 57) zur Rücklauf- oder Tankseite (T) führen.

21. Filtervorrichtung nach einem der Ansprüche 13 bis 20, **dadurch gekennzeichnet, dass** im Bodenteil (23) ein zum Tank (T) führender weiterer Ausgang (25) vorgesehen ist und dass das sechste Rückschlagventil (V₆) als Vorspannventil die Reinseite (1, 57) bei Erreichen der gewünschten Vorspannung mit dem weiteren Ausgang (25) des Bodenteils (23) verbindet.

22. Filtervorrichtung nach Anspruch 20 oder 21, **dadurch gekennzeichnet, dass** die Nachsaugeinrichtung (11) ein Nachsaugfilter (F4) zwischen den vom Nachsaugventil (V₇) schließbaren Ausgängen (81) des Bodenteils (23) und dem Tank (T) aufweist.

23. Filtervorrichtung nach einem der Ansprüche 13 bis 22, **dadurch gekennzeichnet, dass** der Versorgungsanschluss (B) am Kopfteil (19) angeordnet ist und über Fluidführungen (72) mit Öffnungen (74) verbindbar ist, die in einer zugeordneten oberen Endkappe (35) des ersten Filterelements (F1) den Zugang zum reinseitigen Raum (57) im Stützkörper (51) bilden.

## Claims

1. Filter device with at least one first connection (A1) on a hydraulic operating circuit, to which a filter element (F1) is assigned, and with at least one further connection (A2), via which quantities of leakage oil from hydraulic components can be supplied, a control appliance (V₂) being provided, by means of which, if the pressure in the operating circuit falls below a pre-definable operating pressure at the first connection (A1), the quantities of leakage oil can be supplied from the further connection (A2) to the filter element (F1), the control appliance comprising a valve arrangement with at least one non-return valve (V₂), which connects the further connection (A2) to the first connection (A1) when the leakage oil pressure at the further connection (A2) exceeds the operating pressure at the first connection (A1), **characterised in that** the control appliance comprises a second non-return valve (V₄) directly connected to the further connection (A2), said valve opening if a desired range of leakage oil pressure levels is exceeded and connecting the further connection (A2) to a branch pipe leading to a return or tank side (T).

2. Filter device according to one of the preceding claims, **characterised in that** a second filter element (F2) in the branch pipe leading from the second non-return valve (V₄) to the return or tank side (T) is provided with a filter grade which is coarser than the filter grade of the first filter element (F1) arranged between the first connection (A1) and the return or tank side (T).

3. Filter device according to claim 2, **characterised in that** the control appliance comprises a third non-return valve (V₃), which, if a pre-definable maximum value of the operating pressure at the first connection (A1) is exceeded, connects said connection to the further connection (A2) and thus forms a bypass to the first filter element (F1) via the second filter element (F2).

4. Filter device according to either claim 2 or claim 3, **characterised in that** a further bypass leading to the return or tank side (T) and circumventing the second filter element (F2) comprises a fourth non-return valve (V₅) that opens due to the pressure prevailing at the second connection (A2).

5. Filter device according to claim 4, **characterised in that** a coarse screen (F3) is arranged in the further bypass.

6. Filter device according to any one of claims 2 to 5, **characterised in that**, to supply filtered hydraulic fluid to hydrostatic components, such as feed pumps, a supply connection (B) is connected to the clean side (1) of at least the first (F1) and/or the second filter element (F2).

7. Filter device according to claim 6, **characterised in that** the clean side (1) of the first (F1) and/or second filter element (F2) and thus the supply connection (B) are connected to a tank (T) via a suction appliance (11), which comprises a fifth non-return valve (V₇) as a suction valve and a sixth non-return valve (V₆) for a desired pre-loading of the hydraulic fluid at the supply connection (B).

8. Filter device according to claim 7, **characterised in that** the suction appliance (11) comprises a suction filter (F4) connected in series with the fifth non-return valve (V₇).

9. Filter device according to any one of claims 2 to 8, **characterised in that** it comprises a filter housing (17) defining a longitudinal axis, in which the first (F1) and second filter element (F2) can be received such that they are connected to and arranged coaxially behind one another.

10. Filter device according to any one of claims 2 to 9, **characterised in that** the first filter element (F1) is adjacent to a removable top part (19) and the second filter element (F2) is adjacent to a base part (23) of the housing (17).

11. Filter device according to claim 10, **characterised in that** fluid chambers (43, 45) are formed in the housing (17) between the inside of said housing and the outside of the filter medium (39, 41) of the first (F1) and the second filter element (F2), said fluid chambers being separated by a sealing arrangement (47), which is provided at the transition region of said filter elements (F1, F2), into an upper fluid chamber (43) assigned to the first filter element (F1) and a lower fluid chamber (45) assigned to the second filter element (F2).

12. Filter device according to claim 11, **characterised in that** the non-return valves (V₂ and V₄) of the control appliance are arranged at the transition region of the filter elements (F1, F2).

13. Filter device according to either claim 11 or 12, **characterised in that** the outer filter medium (39, 41) of the filter elements (F1, F2) surrounds a support body (49, 51), which, between its fluid-permeable outer wall (53) and a closed inner wall (55) for both filter elements (F1, F2)" forms the chamber (57) as the clean side (1) receiving the filtered hydraulic fluid.

14. Filter device according to claim 13, **characterised in that** the closed inner wall (55) of the support body (49, 51) forms an inner tube for a fluid path passing from the top part (19) to the base part (23).

15. Filter device according to either claim 13 or 14, **characterised in that** the connections (A1 and A2) and fluid passages via which the first connection (A1) is connected to the upper fluid chamber (43) and the second connection (A2) is connected to the fluid path in the inner tube formed by the inner wall (55) of the support body (49, 51) are provided at the top part (19).

16. Filter device according to any one of claims 10 to 15, **characterised in that** the third non-return valve (V₃) forming the pressure-actuated bypass (37) for the first filter element (F1) in the top part (19) is arranged between the connections (A1) and (A2).

17. Filter device according to any one of claims 13 to 16, **characterised in that** the clean side chamber (57) inside the support body (49, 51) is connected to the return or tank side (T) by means of fluid paths (25, 27) in the base part (23).

18. Filter device according to any one of claims 13 to 17, **characterised in that**, in the base part (23), the fourth non-return valve (V₅) associated with the further bypass is arranged such that it normally closes the inner tube in the support bodies (49, 51), or, actuated by pressure, releases an outlet of the inner tube leading to the return or tank side (T).

19. Filter device according to claim 18, **characterised in that** the coarse screen (F3) associated with the further bypass at the end of the inner tube is connected in front of the fourth non-return valve (V₅).

20. Filter device according to any one of claims 13 to 19, **characterised in that** the suction valve of the suction appliance (11) is provided in the form of the fifth non-return valve (V7) at outlets (81) from the base part (23) which lead from the clean side (1, 57) to the return or tank side (T).

21. Filter device according to any one of claims 13 to 20, **characterised in that** a further outlet (25) leading to the tank (T) is provided in the base part (23) and **in that** the sixth non-return valve (V₆) acts as a counterbalance valve connecting the clean side (1, 57) to the further outlet (25) in the base part (23) when the required pre-loading is reached.

22. Filter device according to claim 20 or 21, **characterised in that** the suction appliance (11) comprises a suction filter (F4) between the outlets (81) in the base part (23) and the tank (T) which can be closed by the suction valve (V7) .

23. Filter device according to any one of claims 13 to 22, **characterised in that** the supply connection (B) is arranged on the top part (19) and can be connected by means of fluid passages (72) to openings (74) which, in an assigned upper end cap (35) of the first filter element (F1), form the access to the clean side chamber (57) in the support body (51).

## Revendications

1. Installation de filtration ayant au moins un premier raccord (A1) à un circuit de travail hydraulique, auquel est associé un élément (F1) de filtre, et au moins un autre raccord (A2), par lequel des quantités d'huile de fuite peuvent être envoyées à des composants hydrauliques, dans laquelle il est prévu un disposition (V2) de commande, au moyen duquel, lorsque l'on passe en dessous d'une pression de travail pouvant être donnée à l'avance du circuit de travail au premier raccord (A1), les quantités d'huile de fuite peuvent être envoyées de l'autre raccord (A2) à l'élément (F1) de filtre, le dispositif de commande ayant un agencement de vannes, ayant au moins un clapet anti-retour (V2) qui, pour une pression d'huile de fuite régnant à l'autre raccord (A2), qui dépasse la pression de travail au premier raccord (A1), met l'autre raccord (A2) en communication avec le premier raccord (A1) **caractérisé en ce que** le dispositif de commande a un deuxième clapet anti-retour (V4), qui communique directement avec l'autre raccord et qui, lorsqu'une plage très souhaitée du niveau de la pression d'huile de fuite est dépassée, s'ouvre et met l'autre raccord (A2) en communication avec une branche de conduite menant à un côté (T) de retour ou de réservoir.

2. Installation de filtration suivant l'une des revendications précédentes, **caractérisée en ce que**, dans la branche de conduite menant du deuxième clapet anti-retour (V4) au côté (T) de retour ou de réservoir, est prévu un deuxième élément (F2) de filtre, ayant une finesse de filtre qui est plus grossière que la finesse de filtre du premier élément (F1) de filtre, monté entre le premier raccord (A1) et le côté (T) de retour ou de réservoir.

3. Installation de filtration suivant la revendication 2, **caractérisée en ce que** le dispositif de commande a un troisième clapet anti-retour (V3) qui, lorsqu'une valeur très haute pouvant être donnée à l'avance de la pression de travail au premier raccord (A1) est dépassée, met celui-ci en communication avec l'autre raccord (A2) et forme ainsi, par le deuxième élément (F2) de filtre, une dérivation vers le premier élément (F1) de filtre.

4. Installation de filtration suivant la revendication 2 ou 3, **caractérisée en ce qu'**une autre dérivation, contournant le deuxième élément (F2) de filtre et menant au côté (T) de retour ou de réservoir, a un quatrième clapet anti-retour (V5) s'ouvrant par la pression régnant au deuxième raccord (A2).

5. Installation de filtration suivant la revendication 4, **caractérisée en ce qu'**un filtre (F3) grossier est monté dans l'autre dérivation.

6. Installation de filtration suivant l'une des revendications 2 à 5, **caractérisée en ce que**, pour une alimentation en fluide hydraulique filtré de composants hydrostatiques, comme des pompes d'alimentation, un raccord (B) d'alimentation est relié au côté (1) propre d'au moins le premier (F1) et/ou le deuxième élément (F2) de filtre.

7. Installation de filtration suivant la revendication 6, **caractérisée en ce que** le côté (1) propre du premier (F1) et/ou du deuxième élément (F2) de filtre et ainsi le raccord (B) d'alimentation communiquent avec un réservoir (T) par un dispositif (11) de post-aspiration, qui a un cinquième clapet anti-retour (V7) comme clapet de post-aspiration et un sixième clapet anti-retour (V6) pour une élévation souhaitée de la pression du fluide hydraulique présent au raccord (B) d'alimentation.

8. Installation de filtration suivant la revendication 7, **caractérisée en ce que** le dispositif (11) de post-aspiration a un filtre (F4) de post-aspiration monté en série avec le cinquième clapet anti-retour (V7).

9. Installation de filtration suivant l'une des revendications 2 à 8, **caractérisée en ce qu'**elle a une enveloppe (17) de filtre, qui définit un axe longitudinal et dans laquelle le premier (F1) et le deuxième élément (F2) de filtre peuvent être reçus en un agencement coaxial l'un derrière l'autre et en étant rattachés entre eux.

10. Installation de filtration suivant l'une des revendications 2 à 9, **caractérisée en ce que** le premier élément (F1) de filtre est voisin d'une partie (19) de tête pouvant être retirée et le deuxième élément (F2) de filtre est voisin d'une partie (13) de fond de l'enveloppe (17).

11. Installation de filtration suivant la revendication 10, **caractérisée en ce que**, dans l'enveloppe (17) sont formés, entre sa face intérieure et la face extérieure du milieu (39, 41) filtrant du premier (F1) et du deuxième élément (F2) filtrant, des espaces (43, 45) pour du fluide, qui, par un agencement (47) d'étanchéité, qui est prévu sur les éléments (F1, F2) de filtre à leur partie de transition, sont séparés en un espace (43) supérieur pour du fluide, associé au premier élément (F1) de filtre, et en un espace (45) inférieur pour du fluide, associé au deuxième élément (F2) de filtre.

12. Installation de filtration suivant la revendication 11, **caractérisée en ce que** les clapets anti-retour (V2 et V4) de dispositif de commande sont montés dans la partie de transition des éléments (F1, F2) de filtre.

13. Installation de filtration suivant la revendication 11 ou 12, **caractérisée en ce que** le milieu (39, 41) filtrant, se trouvant à l'extérieur, des éléments (F1, F2) de filtre entoure un corps (49, 51) d'appui, qui forme, entre sa paroi (53) extérieure perméable au fluide et une paroi (55) intérieure fermée pour les deux éléments (F1, F2) de filtre, l'espace (57) qui reçoit comme côté (1) propre le liquide hydraulique filtré.

14. Installation de filtration suivant la revendication 13, **caractérisée en ce que** la paroi (55) intérieure fermée des corps (49, 51) d'appui forme un tuyau intérieur pour un trajet de fluide allant de la partie (19) de tête à la partie (23) de fond.

15. Installation de filtration suivant la revendication 13 ou 14, **caractérisée en ce que**, à la partie (19) de tête sont prévus les raccords (A1 et A2) ainsi que des conduits de fluide, par lesquels le premier raccord (A1) est en communication avec l'espace (43) supérieur pour du fluide et le deuxième raccord (A2) est en communication avec le trajet de fluide dans le tuyau intérieur formé par la paroi (55) intérieure des corps (49,51) d'appui.

16. Installation de filtration suivant l'une des revendications 10 à 15, **caractérisée en ce que** dans la partie (19) de tête est monté entre les raccords (A1 et A2) le troisième clapet anti-retour (V3) formant la dérivation (37) pouvant être actionnée par la pression pour le premier élément (F1) de filtre.

17. Installation de filtration suivant l'une des revendications 13 à 16, **caractérisée en ce que** l'espace (57) du côté propre est, à l'intérieur des corps (49, 51) d'appui, en communication avec le côté (T) de retour ou de réservoir par des trajets (25, 27) de fluide dans la partie (23) de fond.

18. Installation de filtration suivant l'une des revendications 13 à 17, **caractérisée en ce que**, dans la partie (23) de fond est monté le quatrième clapet anti-retour (V5) associé à l'autre dérivation, de manière à ce qu'il ferme normalement le tuyau intérieur dans les corps (49, 51) d'appui ou, actionné par la pression, dégage une sortie du tuyau intérieur menant au côté (T) de retour ou de réservoir.

19. Installation de filtration suivant la revendication 18, **caractérisée en ce que** le filtre (F3) grossier associé à l'autre dérivation est monté au bout du tuyau intérieur en amont du quatrième clapet anti-retour (V5).

20. Installation de filtration suivant l'une des revendications 13 à 19, **caractérisée en ce que** le clapet de post-aspiration du dispositif (11) de post-aspiration est prévu sous la forme du cinquième clapet anti-retour (V7) à des sorties (81) de la partie de fond, qui mènent du côté (1, 57) propre au côté (T) de retour ou de réservoir.

21. Installation de filtration suivant l'une des revendications 13 à 20, **caractérisée en ce qu'**il est prévu dans la partie (23) de fond une autre sortie (25) menant au réservoir (T) et **en ce que** le sixième clapet anti-retour (V6), comme clapet élevant la pression, met le côté (1, 57) propre, lorsque la surpression souhaitée est atteinte, en communication avec l'autre sortie (25) de la partie (23) de fond.

22. Installation de filtration suivant la revendication 20 ou 21, **caractérisée en ce que** le dispositif (11) de post-aspiration a un filtre (F4) de post-aspiration entre le réservoir (T) et les sorties (81), pouvant être fermées par le clapet (V7) de post-aspiration, de la partie (23) de fond.

23. Installation de filtration suivant l'une des revendications 13 à 22, **caractérisée en ce que** le raccord (B) d'alimentation est disposé sur la partie (19) de tête et peut communiquer par des conduits (72) de fluide avec des ouvertures (74), qui forment, dans une coiffe (35) d'extrémité supérieure associée du premier élément (F1) de filtre, l'accès à l'espace (57) du côté propre du corps (51) d'appui.
